(19) Europäisches Patentamt
European Patent Office
Office européen des brevets

(11) Veröffentlichungsnummer: **0 325 980**
**A2**

(12) **EUROPÄISCHE PATENTANMELDUNG**

(21) Anmeldenummer: **89100648.8**

(22) Anmeldetag: **16.01.89**

(51) Int. Cl.⁴: **F16K 3/08 , F16K 3/32**

(30) Priorität: **27.01.88 CH 281/88**

(43) Veröffentlichungstag der Anmeldung:
**02.08.89 Patentblatt 89/31**

(84) Benannte Vertragsstaaten:
**AT CH DE FR IT LI**

(71) Anmelder: **KWC AG**
**Hauptstrasse 130**
**CH-5726 Unterkulm(CH)**

(72) Erfinder: **Graber, Heinz**
**Winkelweg 514**
**CH-5727 Oberkulm(CH)**

(74) Vertreter: **Patentanwälte Schaad, Balass & Partner**
**Dufourstrasse 101 Postfach**
**CH-8034 Zürich(CH)**

(54) **Drehschieber-Hahn.**

(57) Der Keramik-Oberteil (10) ist als Drehschieber ausgebildet und weist ein Drehscheibe (22) mit einer Durchlassöffnung (24) und eine an dieser anliegende Scheibe (26) mit einer Durchlassöffnung (28) auf. Die Scheibe (26) ist gehäusefest angeordnet, während die Drehscheibe (22) mittels des Betätigungsgliedes (20) um die Drehachse (18) drehbar ist. Die beiden Durchlassöffnungen (24, 28) sind somit in und ausser Ueberlappung bringbar. Am der Drehscheibe (22) entfernten endbereich weist das Betätigungsglied (20) eine Verzahnung (50) auf. Auf der Verzahnung (50) sitzen zwei Nockenscheiben (56, 64) mit je einer in radialer Richtung gegen aussen vorstehenden Nase (58). Am Gehäuse (16) des Keramik-Oberteils (10) ist ein die Nockenscheiben (56, 64) teilweise umgreifender Gegenanschlag (70) mit zwei Gegenanschlagflächen (72, 72') angeordnet. Für die Begrenzung des zulässigen Drehwinkels des Betätigungsgliedes (20) können die beiden Nockenscheiben (56, 64) gegeneinander verdreht auf die Verzahnung (50) aufgesetzt werden, so dass eine seitliche Fläche der Nase (58) der ersten Nockenscheibe (56) die erste Anschlagfläche (60') bildet und die zweite Anschlagfläche (60) von einer seitlichen Fläche der Nase (58) der zweiten Nockenscheibe (64) gebildet wird. der Abstand zwischen den beiden Anschlagflächen (60, 60') ist somit frei wählbar und der zulässige Drehwinkel des Betätigungsgliedes (20) kann begrenzt werden.

Fig. 1

Fig. 6

## DREHSCHIEBER-HAHN

Die vorliegende Erfindung betrifft einen Drehschieber-Hahn insbesondere Wasserhahn gemäss dem Oberbegriff des Anspruchs 1. Solche Drehschieber-Hähne sind bekannt und werden beispielsweise als Waschtischarmaturen eingesetzt. Wie diese bei Drehschiebern üblich ist, muss der Drehwinkel des Betätigungsgliedes in der Offen- bzw. Zustellung begrenzt werden, weil der Drehschieber selber keine Anschläge aufweist und somit die beiden Stellungen nicht definiert wären.

Bei Waschtischarmaturen würde zum Händewaschen eine Durchflussleistung von 5 bis 6 Litern pro Minute genügen. Es gibt nun aber Vorschriften, die verlangen, dass solche Waschtischarmaturen eine Durchflussleistung von 12 Litern pro Minute zulassen. Es ist ohne weiteres einzusehen, dass bei vielen Anwendungen, wie z.B. zum Händewaschen, unnötigerweise viel Wasser verbraucht wird. Es ist daher wünschenswert, bei Drehschieber-Hähnen die beispielsweise eine Durchflussleistung von mindestens 12 Litern pro Minute aufweisen, die durchflussleistung auf einen kleineren Wert, beispielsweise von 5 bis 6 Litern pro Minute, begrenzen zu können.

Drehscheiben und ortsfeste Scheiben von solchen Drehschieber-Hähnen können je eine einzige Durchlassöffnung oder je mehrere Durchlassöffnungen aufweisen. Bei Drehscheiben und Scheiben mit je einer einzigen Durchlassöffnung beträgt der Drehwinkel des Betätigungsgliedes üblicherweise 180°. Bei Drehscheiben und Scheiben mit je zwei Durchlassöffnungen beträgt der zulässige Drehwinkel üblicherweise 90°. Es können nun nicht ohne weiteres Drehscheiben-Scheiben-Paare mit unterschiedlicher Anzahl Durchlassöffnungen in einen Drehschieber-Hahn eingebaut werden, weil entweder die Durchflussleistung des Hahnes begrenzt wird oder die Zu- bzw. Offenstellung nicht genau definiert ist.

Es ist nun Aufgabe der vorliegenden Erfindung, einen Drehschieber-Hahn zu schaffen, dessen Durchflussleistung begrenzt werden kann und in den Drehscheiben-Scheiben-Paare mit unterschiedlicher Anzahl Durchlassöffnungen eingesetzt werden können, ohne dass der Drehschieber-Hahn seine Funtionsfähigkeit verliert.

Diese Aufgabe wird durch den kennzeichnenden Teil des Anspruchs 1 gelöst. Dadurch dass der Abstand zwischen den Anschlagflächen und/oder zwischen den Gegenanschlagflächen veränderbar ist, kann der zulässige Drehwinkel des Betätigungsgliedes auf einem beliegigen Wert begrenzt werden. Insbesondere kann die Durchflussleistung auf einen gewünschten Wert begrenzt werden, oder es kann verhindert werden, dass der Drehschieber-Hahn ganz geschlossen werden kann, um, falls dies notwendig ist, eine minimale Durchflussmenge zu garantieren. In einer bevorzugten und konstruktionsmässig sehr einfachen Ausführungsform sind am Betätigungsglied zwei gegeneinander verdrehbare Nockenscheiben angeordnet, welche den Anschlag bilden. Der Gegenanschlag mit den Gegenanschlagflächen kann am Gehäuse ausgebildet sein. Es ist auch denkbar, dass am Betätigungsglied ein Anschlag mit zwei Anschlagflächen angeordnet ist, deren Abstand nicht veränderbar ist. In diesem Fall ist der Abstand zwischen den Gegenanschlagflächen des Gegenanschlags veränderbar. Dies kann in ähnlicher Weise dadurch geschehen, dass beispielsweise am Gehäuse des Drehschieber-Hahns zwei gegeneinander verdrehbare Nockenscheiben angeordnet sind, welche den Gegenanschlag bilden.

Bevorzugte Ausführungsformen sind in den abhängigen Ansprüchen angegeben.

Die Erfindung wird anhand der Zeichnung näher erläutert. Es zeichen rein schematisch:

Fig. 1 in einem Schnitt einen Keramik-Oberteil eines Drehschieber-Hahns,

Fig. 2 & 3 eine Ansicht der Keramikscheiben mit je einer Durchlassöffnung in Richtung des Pfeiles II der Fig. 1,

Fig. 4 eine Ansicht auf keramikscheiben mit je zwei Durchlassöffnungen, und

Fig. 5 & 6 in Draufsicht den Keramik-Oberteil gemäss Fig. 1 ohne Betätigungskopf, wobei der Drehwinkel des Betätigungsgliedes auf 180° bzw. 90° begrenzt ist.

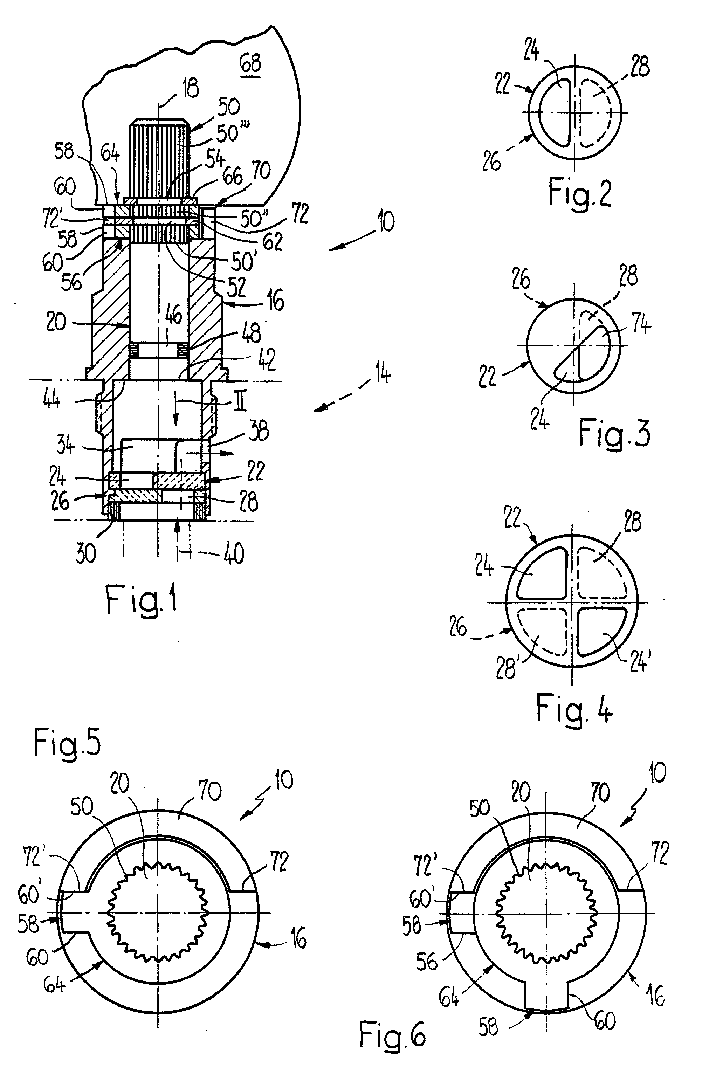

Fig. 1 zeigt einen Drehschieber-Hahn mit einem Keramikoberteil 10, welcher in einen strichpunktiert angedeuteten Unterteil 14 eingeschraubt ist. Das Gehäuse 16 des Keramikoberteils 10 ist in einer Ebene, in welcher die Drehachse 18 des im Gehäuse 16 drehbar gelagerten Betätigungsgliedes 20 liegt, geschnitten dargestellt.

Der Keramikoberteil 10 is als Drehschieber ausgebildet und weist eine mit dem Betätigungsglied 20 drehsicher verbundene Drehscheibe 22 aus keramischem Material mit einer Durchlassöffnung 24. An der Drehscheibe 22 liegt eine im Gehäuse 16 drehfest gelagerte Scheibe 26, ebenfalls aus keramischem Material, an, in welcher eine weitere Durchlassöffnung 26 vorgesehen ist. Eine zwischen der Scheibe 26 und dem Unterteil 14 angeordnete Dichtung ist mit 30 bezeichnet.

Im der Keramikscheibe 22 benachbarten Endbereich weist das Betätigungsglied 20 eine Umlenkausnehmung 34 auf, um das zuströmende Wasser zu einer radialen Austrittsöffnung 38 in Gehäuse 16 umzulenken. Die Strömungsrichtung des Wassers ist mit einem gestrichelten Pfeil angedeutet und mit 40 bezeichnet.

Entgegen dem Wasserdruck stützt sich das Betätigungsglied 20 mittels einer Stützfläche 42 an einer Gegenfläche 44 des Gehäuses 16 ab. Am Betätigungsglied 20 ist eine Umfangsnut 46 vorgesehen, in welcher eine O-Ringdichtung 48 angeordnet ist.

Im der Drehscheibe 22 entfernten endbereich weist das Betätigungsglied 20 eine Aussenverzahnung 50 auf, welche durch zwei in Umfangsrichtung umlaufende Nuten 52 bzw. 54 unterbrochen ist. Die so gebildeten drei Teile der Aussenverzahnung 50 sind mit 50', 50" und 50''' bezeichnet. Auf dem ersten Teil 50' der Aussenverzahnung 50 sitzt eine erste Nockenscheibe 56 mit einer entsprechenden Innenverzahnung. Die Nockenscheibe 56 weit eine in radialer Richtung gegen aussen vorstehende Nase 58 auf, an welcher seitliche Anschlagflächen 60 ausgebildet sind, von denen in der Fig. 1 nur eine sichtbar ist. Diese Nochenscheibe 56 stützt sich mit einer Stirnseite am Gehäuse 16 ab und die andere Stirnseite liegt an einer Seeger-Ringsicherung 62 an, welche in die Nut 52 eingesetzt ist. Die erste Nockenscheibe 56 und die Seeger-Ringsicherung 62 verhindern zusammen mit der Stützfläche 42 und Gegenfläche 44 eine Verschiebung des Betätigungsgliedes 20 gegenüber dem Gehäuse 16 in Richtung der Drehachse 18.

Auf dem zweiten Teil 50" der Aussenverzahnung 50 sitzt eine zweite Nockenscheibe 64, die gleich ausgebildet ist wei die erste Nockenscheibe 56 und daher nicht mehr näher beschrieben ist. Gegen Verschiebung in Richtung der Drehachoe 18 ist diese zweite Nockenscheibe 64 mittels einer zweiten Seeger-Ringsicherung 66 gesichert, welche in die Nut 54 eingesetzt ist. Auf dem dritten Teil 50''' der Aussenverzahnung 50 sitzt der abgeschnitten dargestellte Betätigungskopf 68.

Am Gehäuse 16 ist ein die beiden Nockenscheiben 56, 64 in Umfangsrichtung teilweise umgreifender Gegenanschlag 70 mit zwei Gegenanschlagflächen 72 bzw. 72' angeordnet.

Die Figuren 2 und 3 zeigen die Drehscheiben 22 und Scheibe 26 in Richtung des Pfeiles II der Fig. 1. In der Zustellung des Keramik-Oberteils 10 (siehe auch Fig. 1) stehen die beiden Durchlssöffnungen 24 und 28 ausser Ueberlappung. Durch Drehen des Betätigungsgliedes 20 mittels des Betätigungskopfs 68 im Gegenuhrzeigersinn werden die beiden Durchlassöffnungen 24, 28 mindestens teilweise in Ueberlappung gebracht, wodurch je nach Drehwinkel des Betätigungsgliedes 20 ein mehr oder weniger grosser freier Strömungsquerschnitt 74 entsteht.

Fig. 4 zeigt eine Ansicht von einer Drehscheibe 22 und einer Scheibe 26 mit je zwei einander diametral gegenüberliegenden Durchlassöffnungen 24, 24' bzw. 28, 28'. Durch Verdrehen der Drehscheibe 22 um 90° werden die Durchlassöffnungen 24, 24' mit den Druchlassöffnungen 28, 28' in Ueberlappung gebracht, wodurch ein grösstmöglicher freier Strömungsquerschnitt 74 geschaffen werden kann.

Die Fig. 5 und 6 zeigen in vergrösserter und vereinfachter Darstellung eine Draufsicht des Keramik-Oberteils 10 der Fig. 1, wobei der Betätigungskopf 68 nicht dargestellt ist. Der am Gehäuse 16 ausgebildete Gegenanschlag 70 weist die beiden Gegenanschlagflächen 72 bzw. 72' auf. Auf der Verzahnung 50 des Betätigungsgliedes 20 sitzen die beiden Nockenscheiben 56 und 64, wobei in der Fig. 5 nur die zweite Nockenscheibe 64 sichtbar ist (vergl. auch Fig. 1). Die beiden radial gegen aussen vorstehenden Nasen 58 der beiden Nockenscheiben 56, 64 sind übereinander liegend ausgerichtet. Die seitlichen Flächen der Nasen 58 bilden in diesem Fall die Anschlagflächen 60 bzw. 60'. Wei in der Fig. 5 dargestellt, liegt die Anschlagfäche 60' an der Gegenanschlagfläche 72' an. Die so definierte Stellung des Betätigungsgliedes 20 entspricht beispielsweise der Zustellung des Keramik-Oberteils 10, wei dies in den Fig. 1 und 2 dargestellt ist. Dass Betätigungsglied 20 kann im Gegenuhrzeigersinn gedreht werden, bis die Anschlagfläche 60 an der Gegenanschlagfläche 72 ansteht. Wie aus der Fig. 5 erkennbar ist, beträgt der zulässige Drehwinkel des Betätigungsgliedes 20 180°. Wenn die Anschlagfläche 60 an der Gegenanschlagfläche 72 anliegt, überlappen sich die beiden Durchlassöffnungen 24, 28 vollständig, so dass ein maximaler Strömungsquerschnitt 74 gebildet wird.

In der Fig. 6 sind nun die beiden Nockenscheiben 56 und 64 um 90° gegen einander verdreht angeordnet. Die der Gegenanschlagfläche 72' zugekehrte Seitenfläche der Nase 58 der ersten Nockenscheibe 56 bildet nun eine Anschlagfläche 60', während die zweite Anschlagfläche 60 von der der Gegenanschlagfläche 72 zugekehrten seitlichen Fläche der Nase 58 der zweiten Nockenscheibe 64 gebildet wird. Wie dies aus der Fig. 6 gut erkennbar ist, kann das Betätigungsglied 20 von der in der Fig. dargestellten Stellung im Gegenuhrzeigersinn um 90° verdreht werden, bis die Anschlagfläche 60 an der Gegenanschlagfläche 72 ansteht. Der so auf 90° begrenzte Drehwinkel des Betätigungsgliedes 20 entspricht beispielsweise dem Drehwinkel von der Zu- in die Offenstellung eines Keramik-Oberteils 10 mit einer Drehscheibe 22 und einer Scheibe 26 mit je zwei Durchlassöffnungen 24, 24' bzw. 28, 28' gemäss Fig. 4. Sind hingegen in einem Keramik-Oberteil 10 eine Drehscheiben 22 und eine Scheibe 26 mit je nur einer Durchlassöffnung 24, 28 gemäss den Fig. 1 bis 3 vorgesehen, so kann mit zwei gegeneinander um 90° versetzten Nockenscheiben 56, 64 der Strömungsquerschnitt 74 auf der Hälfte des maximal möglichen Strömungsquerschnittes begrenzt werden.

Es ist einzusehen, dass die beiden Nockenscheiben 56, 64 entsprechend der Zahnteilung der Verzahnung 50 gegenein ander versetzt angeordnet sein können, so dass der Abstand zwischen den Anschlagflächen 60 und 60' in kleinen Schritten geändert werden kann. Es ist somit möglich, dass der maximal zulässige Strömungsquerschnitt 74 auf einen beliebigen Wert begrenzt werden kann.

Für das Herauslösen der Nockenscheibe 64 aus der Verzahnung 50 ist die Seeger-Ringsicherung 66 zu lösen und die Nockenscheibe 64 in Richtung der Drehachse 18 abzuschieben. Die Nockenscheibe 64 kann dann gegenüber der ersten Nockenscheibe 56 verdreht weider auf die Verzahnung 50 aufgeschoben und mittels der Seeger-Ringsicherung 66 fixiert werden.

Durch zusätzliches Entfernen der Seeger-Ringsicherung 62 könnte, auch die erste Nockenscheibe 56 gegenüber dem Betätigungsglied 20 verdreht werden, entweder um den Drehwinkel des Betätigungsgliedes 20 derart zu beschränken, dass immer ein minimaler Strömungsquerschnitt 74 freibleibt, und somit dauernd eine minimale Menge an Wasser durch den Keramik-Oberteil 10 fliesst, oder um Oeffnungs-bzw. Schliessrichtung zu vertauschen.

Es ist auch denkbar, dass ein fester Anschlag am Betätigungsglied 20 fixiert ist, wobei der Abstand zwischen den Anschlagflächen 60, 60' nicht veränderbar ist. In diesem Fall ist der Gegenanschlag derart auszubilden, dass der Abstand zwischen den Gegenanschlagflächen 72, 72' veränderbar ist. So können beispielsweise Nockenscheiben mit Gegenanschlagflächen 72, 72' vorgesehen werden, die am Gehäuse 16 verdrehbar fixiert sind.

**Ansprüche**

1. Drehschieber-Hahn, insbesondere Wasserhahn, mit einer gehäusefesten, mindestens eine Durchlassöffnung aufweisenden Scheibe und einer drehbar gelagerten, an der Scheibe anliegenden, ebenfalls mindestens eine Durchlassöffnung aufweisenden Drehscheibe, deren Durchlassöffnung mittels eines Betätigungsgliedes in und ausser Ueberlappung mit der Durchlassöffnung der Scheibe bringbar ist, und mit einem am Betätigungsglied angeordneten, zwei Anschlagflächen aufweisenden Anschlag und einem zwei entsprechende Gegenanschlagflächen aufweisenden, am Gehäuse angeordneten Gegenanschlag für die Begrenzung des Drehwinkels des Betätigungsgliedes, dadurch gekennzeichnet, dass der Abstand zwischen den Anschlagflächen (60, 60') und/oder zwischen den Gegenanschlagflächen (72, 72') veränderbar ist.

2. Drehschieber-Hahn nach Anspruch 1, dadurch gekennzeichnet, dass die Scheibe (26) und die Drehscheibe (22) aus keramischem Material gebildet sind.

3. Drehschieber-Hahn nach Anspruch 1 oder 2, dadurch gekennzeichnet, dass am Betätigungsglied (20) zwei gegeneinander verdrehbare Nockenscheiben (56, 64) angeordnet sind, welche den Anschlag (60, 60') bilden.

4. Drehschieber-Hahn nach Anspruch 3, dadurch gekennzeichnet, dass eine erste Nockenscheibe (56) am Betätigungsglied (20) fest angeordnet ist und die zweite Nockenscheibe (64) an diesem lösbar fixiert ist.

5. Drehschieber-Hahn nach Anspruch 3 oder 4, dadurch gekennzeichnet, dass Betätigungsglied (20) eine Aussenverzahnung (50) und die Nockenscheiben (56, 64) entsprechende Innenverzahnungen aufweisen.

6. Drehschieber-Hahn nach einem der Ansprüche 3 bis 5, dadurch gekennzeichnet, dass die Nockenscheiben (56, 64) in radialer Richtung vorstehende Nasen (58) aufweisen, an welchen Anschlagflächen (60, 60') ausgebildet sind.

7. Drehschieber-Hahn nach Anspruch 1 oder 2, dadurch gekennzeichnet, dass der Gegenschlag am Gehäuse (16) ausgebildet ist und die Gegenanschlagflächen (72, 72') bei minimalem Abstand zwischen dem Anschlagflächen (60, 60') einen Drehwinkel des Betätigungsgliedes (20) von im wesentliche 180° zulassen.

8. Drehschieber-Hahn nach Anspruch 6 und 7, dadurch gekennzeichnet, dass die Gegenanschlagflächen (72, 72') bei einander überdeckenden Nasen (58) der Nockenscheiben (56, 64) einen Drehwinkel des Betätigungsgliedes (20) von im wesentlich 180° zulassen und die Nockenscheiben (56, 64) im wesentlichen um 90° gegeneinander verschiebbar sind.

Fig.1

Fig.2

Fig.3

Fig. 4

Fig.5

Fig.6